# EUROPEAN PATENT APPLICATION

(11) **EP 3 584 232 A1**
(43) Date of publication of application: **25.12.2019**
(21) Application number: 18792086.3
(22) Date of filing: 04.04.2018
(51) Int. Cl.: C03C 27/10

(54) **INDUCTION-HEATING WELDING METHOD FOR VACUUM GLASS**

(30) Priority: 26.04.2017 CN 201710282659
(71) Applicant: Luoyang Landglass Technology Co., Ltd., Henan 471000 (CN)
(72) Inventor: LI, Yanbing, Luoyang Henan 471000 (CN); WANG, Zhangsheng, Luoyang Henan 471000 (CN)
(74) Representative: Grünecker Patent- und Rechtsanwälte PartG mbB
(86) International application number: PCT/CN2018/081812
(87) International publication number: WO 2018/196570

(57) **Abstract**

An induction-heating welding method for vacuum insulated glass, the vacuum insulated glass comprises an upper glass substrate and a lower glass substrate. Metal layers are prepared in regions to be sealed of the upper glass substrate and the lower glass substrate. A continuous solder is distributed on the metal layer in the region to be sealed of the lower glass substrate. The upper glass substrate and the lower glass substrate are superposed. During welding, the center of a high-frequency induction welding head moves forward along the center line of the width direction of the metal layers; during induction heating of corner regions of the metal layers, the position of a moving trajectory of the center of the high-frequency induction welding head relative to the center line of the width direction of each metal layer is changed, so that the moving trajectory of the center of the high-frequency induction welding head deviates from the center line of the width direction of the metal layers, and thus, induction power of the metal layers in the corner regions is reduced, and overheating of the metal layers in the corner regions is avoided.

## Description

### BACKGROUND

### Technical Field

The present invention relates to the technical field of vacuum insulated glass, and in particular to an induction-heating welding method for vacuum insulated glass.

### Related Art

vacuum insulated glass is an emerging category of glass, and is generally composed of two pieces of glass between which is a vacuum layer. Due to the existence of this vacuum layer, vacuum insulated glass has good performance in sound insulation, heat insulation and condensation resistance, and is more in line with the national development requirements for energy conservation and environmental protection.

The sealing quality of vacuum insulated glass directly affects the performance of vacuum insulated glass. At present, the sealing of vacuum insulated glass mainly adopts two methods: one is sealing with low-melting-point glass powder, and the other is sealing with metal. When the metal is used for sealing, a metal layer is firstly prepared at the edge portions of the opposite surfaces of the two glass substrates, and then a brazing process is used to firmly connect the metal layer and the solder, thereby achieving airtight sealing of the two glass substrates.

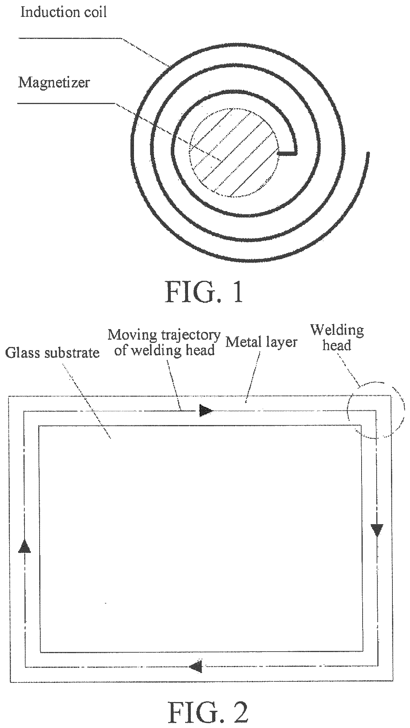

In the sealing process, the brazing solder can be heated by high-frequency induction heating, and the high-frequency induction welding head is formed by coiling a high-frequency induction coil, with reference to FIG. 1. In the welding process, the center line of the high-frequency induction welding head is aligned with the center line of the welding strip, and the high-frequency induction welding head moves forward at a uniform speed along the center line of the welding strip, thereby achieving airtight welding around the vacuum insulated glass.

Since the solder and the metal layer coexist in the sealing region, in addition to heating the solder, the high-frequency induction welding head also heats the metal layer in the sealing region during the operation. In the actual production process, it is found that the glass substrate often has a phenomenon of over-burning of the metal layer in its corner position, referring to the position of the high-frequency induction welding head in FIG. 2 for the corner position, so that the bonding strength between the metal layer and the glass substrate is greatly reduced. For example, when the metal layer is a silver film layer sintered on the glass substrate, silver in the silver film in the corner region of the glass substrate is fused into the brazing solder with overheating, so that the welding strength of the produced vacuum insulated glass at the corner portion is greatly reduced, thereby affecting the welding reliability and service life of the vacuum insulated glass.

### SUMMARY

In view of the problem that the induction-heating welding in the prior art reduces the welding strength at the corner of the vacuum insulated glass, the inventors have found through research that: the high-frequency induction welding head necessarily has a deceleration-redirection-acceleration process in the corner region; therefore, the induction heating time of the internal corner portion of the corner region of the vacuum insulated glass being too long and the heating speed of the edge of the metal layer in the heating process being significantly greater than the heating speed of the center of the metal layer are the main cause for over-burning of the metal layer in the corner region; and the over-burning of the internal corner portion of the corner region is especially serious. The inventors have found through research that in theory, the above problem can be solved by reducing the power of induction heating, increasing the moving speed of the high-frequency induction welding head and changing the height between the high-frequency induction welding head and the metal layer. In the actual implementation process, it was found that the above-mentioned means had low operability, and had certain, but not obvious effects.

The present invention aims to provide an induction-heating welding method for vacuum insulated glass. The position of a moving trajectory of the center of the high-frequency induction welding head relative to the center line of the width direction of the metal layer is changed, so that the moving trajectory of the center of the high-frequency induction welding head deviates from the center line of the width direction of the metal layers, and thus, induction power of the metal layers in the corner regions is reduced, thereby avoiding the over-burning phenomenon of the metal layers in the corner regions. Here, the corner region is explained as follows: the region where the metal layer is redirected at the center line of the width direction is the corner region.

In order to achieve the above objective, the present invention adopts the following technical solution:
An induction-heating welding method for vacuum insulated glass is provided. The vacuum insulated glass comprises an upper glass substrate and a lower glass substrate. Metal layers are prepared in regions to be sealed of the upper glass substrate and the lower glass substrate. A continuous solder is distributed on the metal layer in the region to be sealed of the lower glass substrate. The upper glass substrate and the lower glass substrate are superposed. During welding, the center of a high-frequency induction welding head moves forward along the center line of the width direction of the metal layers; during induction heating of corner regions of the metal layers, the position of a moving trajectory of the center of the high-frequency induction welding head relative to the center line of the width direction of the metal layer is changed, so that the moving trajectory of the center of the high-frequency induction welding head deviates from the center line of the width direction of the metal layers, and thus, induction power of the metal layers in the corner regions is reduced, and overheating of the metal layers in the corner regions is avoided.

Further, the manner of changing the position of a moving trajectory of the center of the high-frequency induction welding head relative to the center line of the width direction of the metal layer is that the moving trajectory of the center of the high-frequency induction welding head in the corner region is located outside the center line of the width direction of the metal layer.

Further, the manner of changing the position of a moving trajectory of the center of the high-frequency induction welding head relative to the center line of the width direction of the metal layer is that a shape of the metal layer is changed such that the inner edge and the outer edge of the metal layer in the corner region are both arc-shaped.

Further, an arc radius of the inner edge of the metal layer in the corner region is r, an arc radius of the outer edge of the metal layer in the corner region is R, a width of a straight segment of the metal layer is d, and d=R-r.

Further, the width of the metal layer is 8 mm, the arc radius of the inner edge of the metal layer in the corner region is 3 mm, and the arc radius of the outer edge of the metal layer in the corner region is 11 mm.

Further, when the surface of the glass substrate is in a shape of a circle, the metal layer disposed in the region to be sealed of the glass substrate is in a shape of a circular ring, a width of the circular ring is d, a radius of the inner circle of the circular ring is r, the moving trajectory of the center of the high-frequency induction welding head is a circle concentric with the circular ring, a radius of the circle is R, and r+d/2<R<r+d.

Further, the position of the moving trajectory of the center of the high-frequency induction welding head relative to the center line of the width direction of the metal layer is changed, so that a distance of the moving trajectory of the center of the high-frequency induction welding head deviating from the center line of the width direction of the metal layer is less than half of the width of the metal layer.

According to the method, the position of the moving trajectory of the center of the high-frequency induction welding head relative to the center line of the width direction of the metal layer is changed, so that the moving trajectory of the center of the high-frequency induction welding head deviates from the center line of the width direction of the metal layers, and thus, induction power of the metal layers in the corner regions is reduced, thereby avoiding the over-burning of the metal layers. According to the vacuum insulated glass obtained by the method, the sealing performance of the sealing region is improved, the qualification rate of the product is increased, and the service life of the vacuum insulated glass is prolonged.

### BRIEF DESCRIPTION OF THE DRAWINGS

FIG. 1 is a schematic view of a high-frequency induction welding head;
FIG. 2 is a schematic view of induction heating welding in the prior art;
FIG. 3 is a schematic view of welding of Embodiment 1;
FIG. 4 is an enlarged schematic view of Region A in FIG. 3;
FIG. 5 is a schematic view of welding of Embodiment 2;
FIG. 6 is a schematic view of welding of Embodiment 3;
FIG. 7 is a schematic view of welding of Embodiment 4; and
FIG. 8 is a schematic view of welding of Embodiment 5.

In the figures, 1 glass substrate, 2 metal layer, 21 outer edge of metal layer in corner region, 22 inner edge of metal layer in corner region, 23 center line of width direction of metal layer, 3 high-frequency induction welding head, 4 moving route.

### DETAILED DESCRIPTION

The present invention is described below in a more comprehensive manner through embodiments. The present invention may be embodied in various forms, and should not be construed as being limited to the exemplary embodiments described herein.

For ease of description, spatially relative terms such as "above", "below", "left", and "right" may be used herein to describe a relationship between one element or feature shown in the figure and another element or feature. It should be understood that such spatially relative terms are intended to encompass different orientations of the device in addition to the orientation depicted in the figures. For example, if the device in the figure is turned over, an element or feature described as being "below" another element or feature will then be "above" the other element or feature. Therefore, the exemplary term "below" may encompasses both the above and below orientations. The device may also be oriented in other ways (for example, rotated 90 degrees or at other orientations), and the spatially relative terms used herein are to be interpreted accordingly.

### Embodiment 1

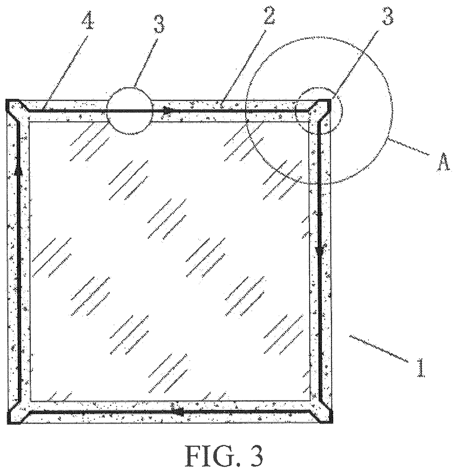

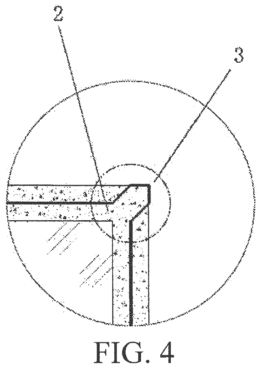

FIG. 3 and FIG. 4 show a first specific implementation of the induction-heating welding method for vacuum insulated glass according to the present invention. In this embodiment, a glass substrate 1 to be sealed is glass having a square surface, a metal layer 2 is previously disposed in the sealing region around the glass substrate 1, the inner edge and the outer edge of the metal layer 2 in each of the 4 corner regions are right-angled, and a continuous solder is distributed on the metal layer 2. During welding of the straight segment of the metal layer 2, the high-frequency induction welding head 3 moves forward at a uniform speed while the center of the high-frequency induction welding head 3 is aligned with the center line of the width direction of the metal layer 2, and the moving route 4 thereof is a straight line. During welding of the corner region of the metal layer 2, the moving route 4 of the high-frequency induction welding head 3 is offset to the outside, so that the center thereof deviates from the center line of the width direction of the metal layer 2 in the moving process of the high-frequency induction welding head 3, and thus, induction power of the metal layer 2 in the corner regions is reduced. The deviation distance should be less than half of the width of the metal layer 2.

### Embodiment 2

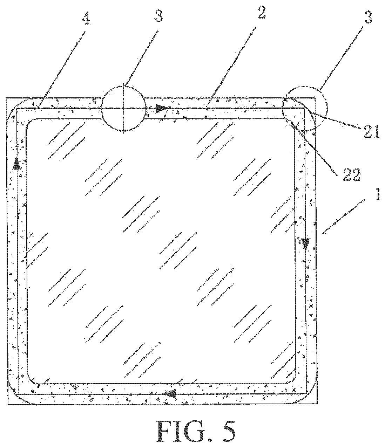

FIG. 5 shows a second specific implementation of the induction-heating welding method for vacuum insulated glass according to the present invention. In this embodiment, the glass substrate 1 to be sealed is glass having a square surface, a metal layer 2 is previously disposed in the sealing region around the glass substrate 1, and a continuous solder is distributed on the metal layer 2. During welding of the straight segment of the metal layer 2, the high-frequency induction welding head 3 moves forward at a uniform speed while the center of the high-frequency induction welding head 3 is aligned with the center line of the width direction of the metal layer 2, and the moving route 4 thereof is a straight line. During welding of the corner region of the metal layer 2, the moving route of the high-frequency induction welding head 3 is kept unchanged, with reference to FIG. 2, that is, the side of the closed pattern formed by connection after the intersection of the center lines of the width direction of the metal layer 2. By changing the shape of the metal layer 2 in the corner region, the outer edge 21 and the inner edge 22 of the metal layer in the corner region are arc-shaped, so that the center of the high-frequency induction welding head 3 deviates outwardly from the center line of the metal layer 2 in the moving process, and thus, induction power of the metal layer 2 in the corner region is reduced. The deviation distance should be less than half of the width of the metal layer 2. The width of the metal layer is preferably 8 mm, the arc radius of the inner edge of the metal layer in the corner region is preferably 3 mm, and the arc radius of the outer edge of the metal layer in the corner region is preferably 11 mm.

### Embodiment 3

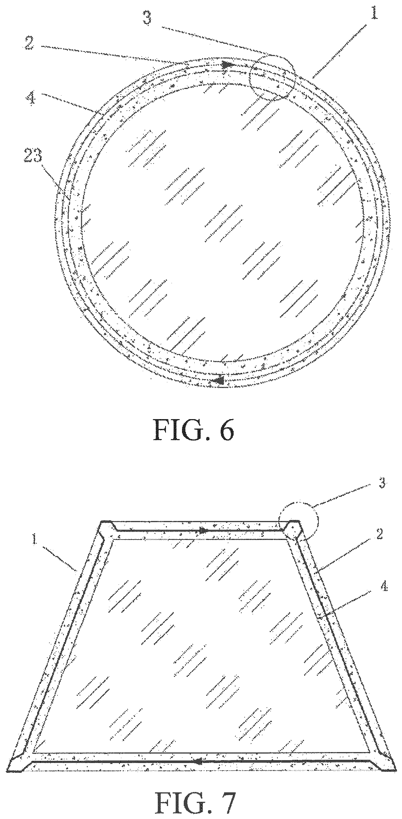

FIG. 6 shows a third specific implementation of the induction-heating welding method for vacuum insulated glass according to the present invention. In this embodiment, the surface of the glass substrate 1 to be sealed is in the shape of a circle, a metal layer 2 in the shape of a circular ring is previously disposed in the sealing region around the glass substrate 1, the width of the circular ring is d, and the radius of the inner circle of the circular ring is r. The metal layer 2 in this embodiment is all the corner region with no straight segments. The welding method for the corner region is substantially the same as that described in Embodiment 1. The moving route 4 of the high-frequency induction welding head 3 is offset to the outside, so that the center line of the high-frequency induction welding head 3 deviates from the center line 23 of the width direction of the metal layer 2 in the moving process, and thus, induction power of the metal layer 2 in the corner region is reduced. The moving trajectory of the center of the high-frequency induction welding head 3 is a circle concentric with the circular ring-shaped metal layer 2, the radius of the circle is R, and r+d/2<R<r+d.

### Embodiment 4

FIG. 7 shows a fourth specific implementation of the induction-heating welding method for vacuum insulated glass according to the present invention. The welding manner is substantially the same as in Embodiment 1, except that the surface of the glass substrate 1 in this embodiment is in the shape of a trapezoid.

### Embodiment 5

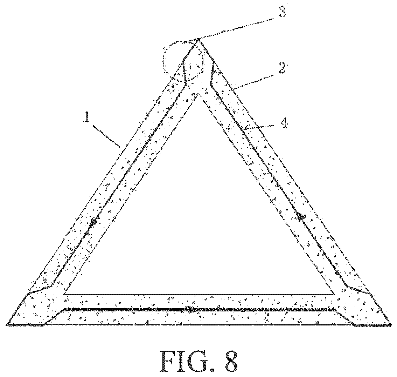

FIG. 8 shows a fifth specific implementation of the induction-heating welding method for vacuum insulated glass according to the present invention. The welding manner is substantially the same as in Embodiment 1, except that the surface of the glass substrate 1 in this embodiment is in the shape of a triangle.

Although several preferred embodiments of this application has been described above with reference to the accompanying drawings, this application is not limited thereto. Any improvement and/or variation made by a person of ordinary skill in the art without departing from the spirit of this application shall fall within the protection scope of this application.

## Claims

1. An induction-heating welding method for vacuum insulated glass, wherein the vacuum insulated glass comprises an upper glass substrate and a lower glass substrate, metal layers are prepared in regions to be sealed of the upper glass substrate and the lower glass substrate, a continuous solder is distributed on the metal layer in the region to be sealed of the lower glass substrate, the upper glass substrate and the lower glass substrate are superposed, and induction-heating welding is performed on the regions to be sealed of the vacuum insulated glass; during welding, the center of a high-frequency induction welding head moves forward along the center line of the width direction of the metal layers, wherein during induction heating of corner regions of the metal layers, the position of a moving trajectory of the center of the high-frequency induction welding head relative to the center line of the width direction of each metal layer is changed, so that the moving trajectory of the center of the high-frequency induction welding head deviates from the center line of the width direction of the metal layers, and thus, induction power of the metal layers in the corner regions is reduced, and overheating of the metal layers in the corner regions is avoided.

2. The welding method according to claim 1, wherein the manner of changing the position of a moving trajectory of the center of the high-frequency induction welding head relative to the center line of the width direction of the metal layer is that the moving trajectory of the center of the high-frequency induction welding head in the corner region is located outside the center line of the width direction of the metal layer.

3. The welding method according to claim 1, wherein the manner of changing the position of a moving trajectory of the center of the high-frequency induction welding head relative to the center line of the width direction of the metal layer is that a shape of the metal layer is changed such that the inner edge and the outer edge of the metal layer in the corner region are both arc-shaped.

4. The welding method according to claim 3, wherein an arc radius of the inner edge of the metal layer in the corner region is r, an arc radius of the outer edge of the metal layer in the corner region is R, a width of a straight segment of the metal layer is d, and d=R-r.

5. The welding method according to claim 4, wherein the width of the metal layer is 8 mm, the arc radius of the inner edge of the metal layer in the corner region is 3 mm, and the arc radius of the outer edge of the metal layer in the corner region is 11 mm.

6. The welding method according to claim 1, wherein when the surface of the glass substrate is in a shape of a circle, the metal layer disposed in the region to be sealed of the glass substrate is in a shape of a circular ring, a width of the circular ring is d, a radius of the inner circle of the circular ring is r, the moving trajectory of the center of the high-frequency induction welding head is a circle concentric with the circular ring, a radius of the circle is R, and r+d/2<R<r+d.

7. The welding method according to any one of claims 1 to 3, wherein the position of the moving trajectory of the center of the high-frequency induction welding head relative to the center line of the width direction of the metal layer is changed, so that a distance of the moving trajectory of the center of the high-frequency induction welding head deviating from the center line of the width direction of the metal layer is less than half of the width of the metal layer.
